# EUROPEAN PATENT APPLICATION

(11) **EP 3 244 171 A1**
(43) Date of publication of application: **15.11.2017**
(21) Application number: 16886813.1
(22) Date of filing: 05.02.2016
(51) Int. Cl.: G01F 1/66, G01P 5/24

(54) **MEASURING DEVICE, MEASURING METHOD, AND PROGRAM**

(71) Applicant: Fuji Electric Co., Ltd., Kawasaki-shi Kanagawa 210-9530 (JP)
(72) Inventor: SAKAUE Satoru, Kawasaki-shi Kanagawa 210-9530 (JP); KISHIRO Masami, Kawasaki-shi Kanagawa 210-9530 (JP); ARAI, Souichi, Kawasaki-shi Kanagawa 210-9530 (JP)
(74) Representative: MERH-IP Matias Erny Reichl Hoffmann Patentanwälte PartG mbB
(86) International application number: PCT/JP2016/053592
(87) International publication number: WO 2017/134835

(57) **Abstract**

A measurement apparatus 100 includes a measurement unit 10 to propagate an ultrasonic wave in a medium 98 that flows inside a pipe 99 and to receive the ultrasonic wave, a difference calculating section 23a to calculate a difference signal obtained by taking a difference in waveforms of reception signals at least between two received ultrasonic waves, and an identifying section 23d to identify a reception timing of transmission of an ultrasonic wave based on a target signal component included in the difference signal. According to the identification of the reception timing based on the target signal component included in the difference signal, a flow velocity of the medium 98 can be measured precisely by using the reception timing.

## Description

### BACKGROUND

### 1. TECHNICAL FIELD

The present invention relates to a measurement apparatus a measurement method and a program.

### 2. RELATED ART

By measuring a time period in which an ultrasonic wave is propagated in a medium, a velocity at which the medium flows (that is, a flow velocity) or a rate at which the medium flows (that is, a flow rate) can be measured, or components of the medium can be identified.

Among measurement methods of flow velocity using an ultrasonic wave, a trigger method and a correlation method have been known (for example, refer to Patent Document 1). With the trigger method, a propagation time period when an ultrasonic wave is propagated in a fluid in a flow direction of the fluid and a propagation time period when the ultrasonic wave is propagated in the opposite direction to the flow direction are measured, and the flow velocity is obtained from a difference between results of these measurements. The trigger method has a disadvantage that although the flow velocity can be accurately measured with the trigger method, in a case where a foreign substance is contained in the fluid, for example, in case where air bubbles are contained in a liquid fluid or in a case where liquid drops are contained in an gas fluid, the measurement precision is significantly lowered due to the scattering of the ultrasonic wave resulted from the foreign substance. With the correlation method, the ultrasonic waves are respectively propagated in a forward direction and a backward direction of the flow in the fluid and are received, and the flow velocity is obtained from a correlation between the respective waveforms. Although with the correlation method the flow velocity can be measured even if a foreign substance with a certain amount is contained in the fluid, the correlation method has a disadvantage that the measurement precision is poor, compared to the trigger method.

An identification of medium components by using an ultrasonic wave is performed by measuring a propagation time period of the ultrasonic wave in a medium to identify the medium based on the measurement result. Similar to the trigger method, this method also has a disadvantage that in a case where a foreign substance is contained in the fluid, the identification precision is significantly lowered due to the scattering of the ultrasonic wave and a turbulence of the waveform resulted from the foreign substance.
- [Patent Document 1]: Japanese Patent Application Publication No. 2010-38667
- [Patent Document 2]: Japanese Patent Publication No. 5326697

In a case where a foreign substance is contained in the medium, the amplitude of the ultrasonic wave is weakened due to the scattering of the ultrasonic wave resulted from the foreign substance, and the amplitude is partially weakened if the scattering is sparse. Accordingly, a signal-to-noise ratio (S/N ratio) is decreased. Here, for example, a plurality of reception signals of the ultrasonic waves are additionally averaged. Accordingly, the amplitude of a signal component included in the reception signal is strengthened by the addition operation, the amplitude of the noise is weakened by the averaging, and the S/N ratio is improved as a result. However, because the ultrasonic wave is not only propagated in the medium but also transmitted to a pipe in which a medium flows, generally, the noise (referred to as an interference noise) derived from the ultrasonic wave transmitted to the pipe is steadily superimposed on the signal component derived from the ultrasonic wave propagated in the medium. Since the interference noise is derived from the ultrasonic wave, that is, a coherent wave, the amplitude of the interference noise is not weakened even if the additionally averaging is performed, strengthened instead in some cases. Also, since those frequencies are equal to each other because the interference noise is derived from the ultrasonic wave, same as the signal component, the filter processing cannot remove the interference noise only.

According to the method described in Patent Document 1, when a flow rate measurement is to be performed, it is determined whether the trigger method or the correlation method is appropriate according to waveform characteristics of a received waveform, a previously measured measurement value, and the like, and the flow rate is measured by switching to the appropriate method based on the determination result. However, in a case where a foreign substance is contained in the medium and the like, if the reception signal becomes small, the method is switched to the correlation method and the measurement precision becomes lowered.

Also, according to the method described in Patent Document 2, before the flow rate measurement, a reverberation component is obtained by using a first component which is not influenced by a reverberation and a second component which is influenced by the reverberation, and when the flow rate measurement is to be performed, the reverberation component is removed from the reception signal to measure the flow rate. However, in a case where a foreign substance is contained in the medium, the reverberation component which is influenced by the scattering due to the foreign substance cannot be appropriately removed from the reception signal.

### SUMMARY

In a first aspect of the present invention, a measurement apparatus is provided, including a measurement unit to propagate a first measurement wave and a second measurement wave in a medium and to receive the first measurement wave and the second measurement wave, a difference calculating section to calculate a difference signal obtained by taking a difference between the received first measurement wave and the received second measurement wave, and an identifying section to identify a reception timing of transmission of a measurement wave based on a target signal component included in the difference signal.

In a second aspect of the present invention, a measurement method is provided, including a step of propagating a first measurement wave and a second measurement wave in a medium and receiving the first measurement wave and the second measurement wave, a step of calculating a difference signal obtained by taking a difference between the received first measurement wave and the received second measurement wave, and a step of identifying a reception timing of transmission of a measurement wave based on a target signal component included in the difference signal.

In a third aspect of the present invention, a program is provided, the program causing a computer to execute a procedure of propagating a first measurement wave and a second measurement wave in a medium and receiving the first measurement wave and the second measurement wave, a procedure of calculating a difference signal obtained by taking a difference between the received first measurement wave and the received second measurement wave, and a procedure of identifying a reception timing of transmission of a measurement wave based on a target signal component included in the difference signal.

The summary clause does not necessarily describe all necessary features of the embodiments of the present invention. The present invention may also be a sub-combination of the features described above.

### BRIEF DESCRIPTION OF THE DRAWINGS

Fig. 1 shows a configuration of a measurement apparatus according to the present embodiment.
Fig. 2 shows a flow of a measurement method according to the present embodiment.
Fig. 3 shows a waveform of a measurement wave.
Fig. 4A shows a waveform of a normal reception signal received with respect to the measurement wave of Fig. 3.
Fig. 4B shows a waveform of an abnormal reception signal received with respect to the measurement wave of Fig. 3.
Fig. 5 shows a waveform of a difference signal obtained by a difference between the reception signal of Fig. 4A and the reception signal of Fig. 4B.
Fig. 6 shows one example of a hardware configuration of a computer according to the present embodiment.

### DESCRIPTION OF EXEMPLARY EMBODIMENTS

Hereinafter, the present invention is described through the embodiments of the invention. However, the following embodiments do not limit the invention according to the claims. Also, all the combinations of the features described in the embodiments are not necessarily essential for solving means the invention.

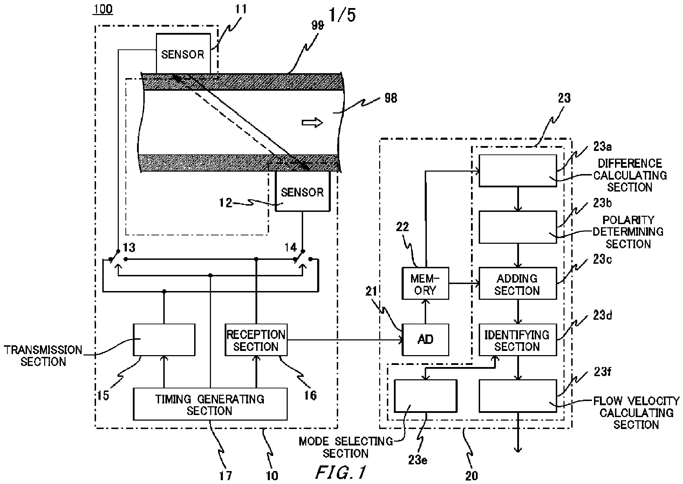

Fig. 1 shows a configuration of a measurement apparatus 100 according to the present embodiment. The measurement apparatus 100 is an apparatus which measures a flow velocity of a medium 98 flowing inside a pipe 99 by measuring a time period (referred to as a propagation time period) in which a measurement wave is propagated in the medium 98 in order to measure the flow velocity precisely even if a foreign substance is contained in the medium 98. Note that it is supposed that the medium 98 is a liquid such as water and contains a foreign substance such as air bubbles. Also, the medium 98 may be gas such as air and vapor, and may contain a foreign substance such as water drop. Also, for convenience of description, the medium 98 is set to flow inside a pipe in a direction shown by an outline arrow in the drawing, and this direction and a direction opposite to this direction are respectively set as a forward direction and a backward direction with respect to the flow of the medium. The measurement apparatus 100 includes a measurement unit 10 and a calculating section 20.

The measurement unit 10 is a unit which propagates a measurement wave in the medium 98 flowing through the pipe 99, and receives the measurement wave. In the present embodiment, an ultrasonic wave is used as the measurement wave. The measurement unit 10 includes sensors 11, 12, switches 13, 14, a transmission section 15, a reception section 16, and a timing generating section 17.

The sensors 11 and 12 are transceivers which transmit and receive ultrasonic waves. The sensors 11 and 12 are respectively fixed to positions on one side of a diameter direction of an outer surface of the existing pipe 99 (that is, an upper side of the pipe 99 extending in a crosswise direction in the drawing) and on the other side (that is, a lower side), where one of the positions is shifted to one side of a flow direction of the medium 98 (that is, an upstream side) and the other of the positions is shifted to the other side (that is, a downstream side). The sensors 11 and 12 receive ultrasonic waves transmitted from the transmission section 15 and output the ultrasonic waves into the pipe 99, and also receive ultrasonic waves propagated in the medium 98 inside the pipe 99 and output the ultrasonic waves into the reception section 16.

The switches 13 and 14 are switching switches which respectively connect the sensors 11 and 12 to the transmission section 15 or the reception section 16. The switch 13 receives a switching signal from the timing generating section 17; for example, the switch 13 receives a high-level signal (H signal), and connects the sensor 11 to the transmission section 15, or receives a low-level signal (L signal) and connects the sensor 11 to the reception section 16. The switch 14 receives from the timing generating section 17 the high-level signal (H signal) and connects the sensor 12 to the reception section 16, or receives the low-level signal (L signal) and connects the sensor 12 to the transmission section 15.

The transmission section 15 has an ultrasonic wave source (not shown), by using which the transmission section 15 receives a drive signal (for example, an ON signal) from the timing generating section 17 to generate and output the ultrasonic wave. As the ultrasonic wave source, a piezoelectric element containing a mixture, for example, PZT and the like, can be adopted.

The reception section 16 receives a drive signal (for example, an ON signal) from the timing generating section 17 and receives the ultrasonic wave, and outputs, to the calculating section 20, a voltage signal with a strength corresponding to the amplitude of the received ultrasonic wave as the reception signal. Here, the drive signal transmitted from the timing generating section 17 is synchronized with the drive signal transmitted from the timing generating section 17 to the transmission section 15 by a delay of a typical propagation time period of the ultrasonic wave in the medium 98, for example, or of a constant time period corresponding to the propagation time period. Accordingly, the waveform of the ultrasonic wave output from the transmission section 15 and propagated in the medium 98 can be captured.

The timing generating section 17 generates the switching signal (that is, the H signal and the L signal) and transmits the switching signal to the switches 13 and 14, and also generates the drive signal (that is, the ON signal) and transmits the drive signal to the transmission section 15 and the reception section 16. The timing generating section 17 synchronizes the switching signal and the drive signal; for example, the timing generating section 17 repeatedly generates the H signal and the L signal in a constant cycle, generates the ON signal synchronizing with the H signal and the L signal. Accordingly, if the switching signal is the H signal and the drive signal is the ON signal, the ultrasonic wave output from the transmission section 15 is transmitted to the sensor 11 via the switch 13, output from the sensor 11 to the inside of the pipe 99, propagated in the medium 98 inside the pipe 99 in the forward direction and received by the sensor 12, and received by the reception section 16 via the switch 14. If the switching signal is the L signal and the drive signal is the ON signal, the ultrasonic wave output from the transmission section 15 is transmitted to the sensor 12 via the switch 14, output from the sensor 12 to the inside of the pipe 99, propagated in the medium 98 inside the pipe 99 in the backward direction and received by the sensor 11, and received by the reception section 16 via the switch 13.

The calculating section 20 is a unit which calculates a flow velocity of the medium 98 by processing the reception signal output from the measurement unit 10. The calculating section 20 includes an AD converter 21, a memory 22, and a calculating section 23.

The AD converter 21 is connected to the reception section 16 of the measurement unit 10, and then sequentially converts the input reception signal (that is, a voltage signal) into a digital signal. Accordingly, the reception signal becomes a sequence of a digital value, representing a signal wave which changes relative to the time. The AD converter 21 transmits the converted reception signal to the memory 22.

Note that an amplifier (not shown) may be provided in a fore stage of the AD converter 21, via which the reception signal may be amplified and input to the AD converter 21.

The memory 22 is connected to the AD converter 21 and stores the reception signal input from the AD converter 21 along with a signal number. The signal number is, for example, a series number in an order that the signal is input from the reception section 16 or an order that the signal from the AD converter 21 is stored in the memory 22.

The calculating section 23 performs a calculation processing on the reception signal stored in the memory 22. The calculating section 23 implements a difference calculating section 23a, a polarity determining section 23b, an adding section 23c, an identifying section 23d, a mode selecting section 23e, and a flow velocity calculating section 23f by executing a controlling program.

The difference calculating section 23a is connected to the memory 22, generates a difference signal by calculating a difference in waveforms between at least two different reception signals from among a plurality of reception signals stored in the memory 22, and outputs the difference signal to the polarity determining section 23b in a later stage.

The polarity determining section 23b is connected to the difference calculating section 23a, and determines a polarity of the target signal component included in the difference signal input from the difference calculating section 23a. Since most of the plurality of reception signals are in similar figures, the polarity determining section 23b may determine the polarity of the target signal component according to, for example, the polarity of a point at which an absolute value of the difference signal becomes maximum. Note that the polarity of the target signal component may be determined to be equal to the polarity of the point at which the absolute value of the difference signal becomes maximum, that is, may be determined as respectively positive and negative relative to positive and negative values of the point at which the absolute value of the difference signal becomes maximum. The polarity determining section 23b outputs, along with the determination result of the polarity, the difference signal to the adding section 23c in a later stage.

Note that based on the determination result of the polarity, the polarity determining section 23b may output the difference signal (by + one time) if the polarity is positive, or invert the difference signal (by - one time) and output the inverted difference signal if the polarity is negative. In this case, the adding section 23c described later becomes to add the difference signal only.

The adding section 23c is connected to the polarity determining section 23b and the memory 22, adds the difference signal input from the polarity determining section 23b based on the determination result of the polarity, and also adds the reception signal stored in the memory 22 to output the respective results to the identifying section 23d in the later stage.

Note that the adding section 23c may be set to respectively add a predetermined arbitrary number of the difference signals and a predetermined arbitrary number of the reception signals and output the result to the identifying section 23d. The arbitrary number is set to be 1 or more. If the arbitrary number is 1, the adding section 23c becomes to output each difference signal and each reception signal to the identifying section 23d without performing the adding processing.

The identifying section 23d is connected to the adding section 23c, and identifies a reception timing of transmission of the ultrasonic wave for each of the forward signal and the backward signal based on the target signal component, which is included in the added difference signal input from the adding section 23c, or the added reception signal. For example, the reception timing may be determined by a timing at which the amplitude of the target signal component, which is included in the difference signal, or of the reception signal exceeds a predetermined threshold. The identifying section 23 d identifies the reception timing based on the target signal component included in the added difference signal in a first measurement mode, and identifies the reception timing based on the added reception signal in a second measurement mode.

The mode selecting section 23e is connected to the identifying section 23d, and selects the measurement mode of the identifying section 23d by using the difference signal added by the identifying section 23d or the individual difference signal. For example, the mode selecting section 23e selects the first measurement mode of the identifying section 23d if the amplitude of the added difference signal or the individual difference signal is equal to or more than a reference value, or selects the second measurement mode of the identifying section 23d if the amplitude is less than the reference value. In a case where no foreign substance is contained in the medium 98, since the signal wave component in the plurality of reception signals do not weaken the amplitude, not only the interference noise but also the measurement wave are offset by the difference between two reception signals; accordingly, the target signal component in the difference signal becomes not to have an amplitude sufficient for identifying the reception timing. Here, in this case, if the amplitude of the difference signal is equal to or more than the reference value, that is, in a case of abnormality where a foreign substance is contained in the medium and the amplitudes of the signal waves for the individual reception signals are significantly different from each other, the first measurement mode using the difference signal is set to be selected, and if the amplitude of the difference signal is less than the reference value, that is, in a case of normality where a foreign substance is hardly contained in the medium and the amplitudes of the signal waves for the individual reception signals are approximately constant, the second measurement mode using the reception signal is set to be selected.

Note that the mode selecting section 23e may select the measurement mode of the identifying section 23d in accordance with whether or not the amplitudes of a predetermined number or proportion or more of the difference signals among a plurality of the difference signals generated by the difference calculating section 23 a are equal to or more than a reference value. For example, the mode selecting section 23e selects the first measurement mode if the number or proportion of the difference signals having the amplitudes that exceed the reference value exceeds an expected number or proportion, or selects the second measurement mode if the expected number or proportion is not exceeded.

Also, not limited to use the added difference signal or the individual reception signal, the mode selecting section 23e may select the measurement mode of the identifying section 23d by using the added reception signal or the individual difference signal. For example, the mode selecting section 23e selects the second measurement mode of the identifying section 23d if the amplitude of the added reception signal or the individual reception signal is equal to or more than the reference value, and selects the first measurement mode of the identifying section 23d if the amplitude is less than the reference value. Also, the mode selecting section 23e may select the measurement mode of the identifying section 23d in accordance with whether or not the amplitude of the predetermined number or proportion or more of the reception signals among the plurality of reception signals are equal to or more than the reference value. For example, the mode selecting section 23e selects the second measurement mode if the number or proportion of the reception signals having the amplitudes that exceed the reference value exceeds an expected number or proportion, or selects the first measurement mode if the expected number or proportion is not exceeded.

The identifying section 23d may identify the reception timing, for example, an average reception timing, based on the target signal component included in each of two or more difference signals, or two or more reception signals. Note that when the reception timing is to be identified by using two or more difference signals, it can be considered that the difference signal is generated by adding each difference signal based on the polarity determined by the polarity determining section 23b, and the identifying section 23d identifies the reception timing of transmission of the measurement wave based on the target component included in the difference signal and the polarity determined by the polarity determining section 23b. The identifying section 23d outputs the identified reception timing to the flow velocity calculating section 23f.

The flow velocity calculating section 23f is connected to the identifying section 23d, and calculates the flow velocity of the medium 98 based on the reception timing of transmission of the ultrasonic wave identified for each of the forward signal and the backward signal input from the identifying section 23d. The flow velocity of the medium 98 is calculated by obtaining a difference in the reception timings of each of the forward signal and the backward signal (equal to a difference in the propagation time periods when the ultrasonic wave is propagated in the medium 98 in the forward direction and in the backward direction) and using the difference and a separation distance between the sensors 11 and 12. The flow velocity calculating section 23f outputs the calculated flow velocity to the outside.

Note that not limited to the flow velocity of the medium 98, the flow velocity calculating section 23f may be set to calculate the flow rate of the medium 98 by multiplying the calculated flow velocity with a cross-sectional area of the pipe 99 and output the flow rate to the outside.

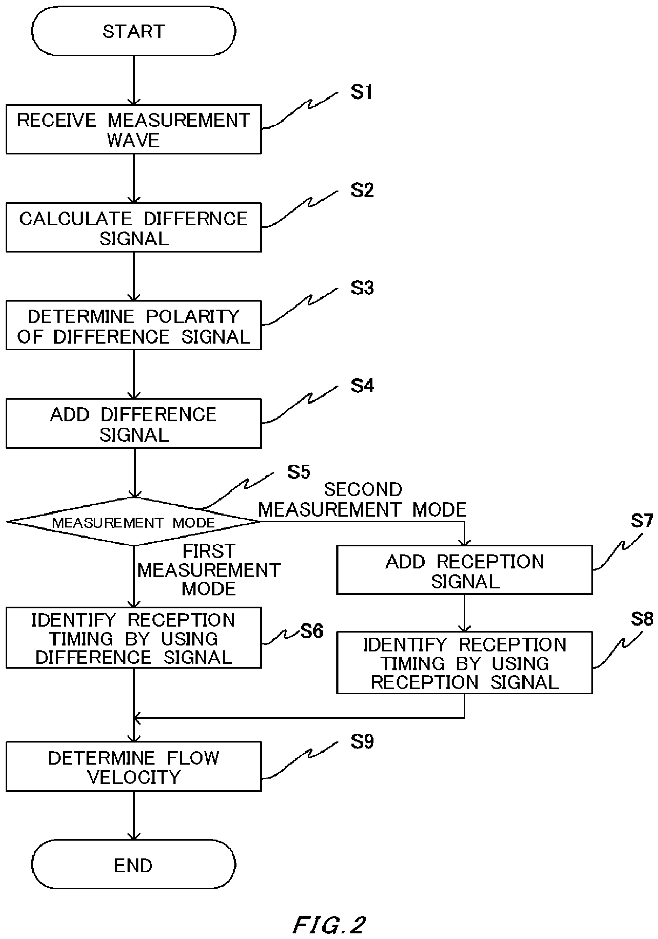

Fig. 2 shows a flow of the measurement method by using the measurement apparatus 100 according to the present embodiment.

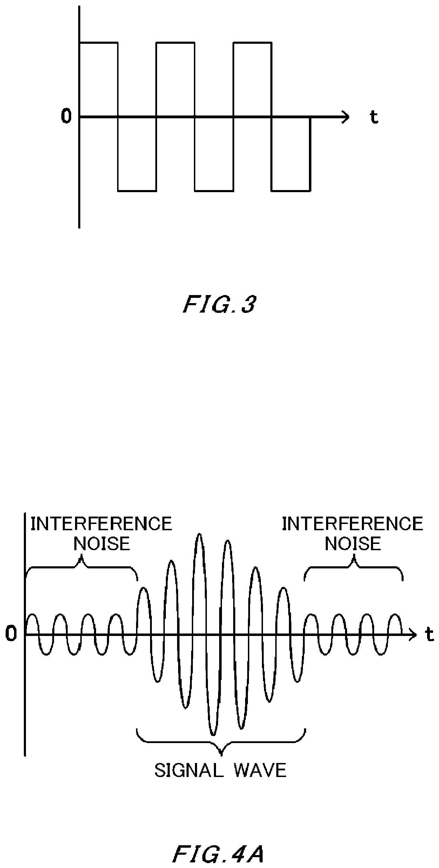

In a step S1, according to the measurement unit 10, an ultrasonic wave is propagated in the medium 98 flowing through the pipe 99 and is received. Here, one example of a waveform of the ultrasonic wave generated by the transmission section 15 of the measurement unit 10 is shown in Fig. 3. The ultrasonic wave has a waveform with a basic pulse having a positive pulse with a positive amplitude and a negative pulse with a negative amplitude following the positive pulse, the basic pulse repeated for three times.

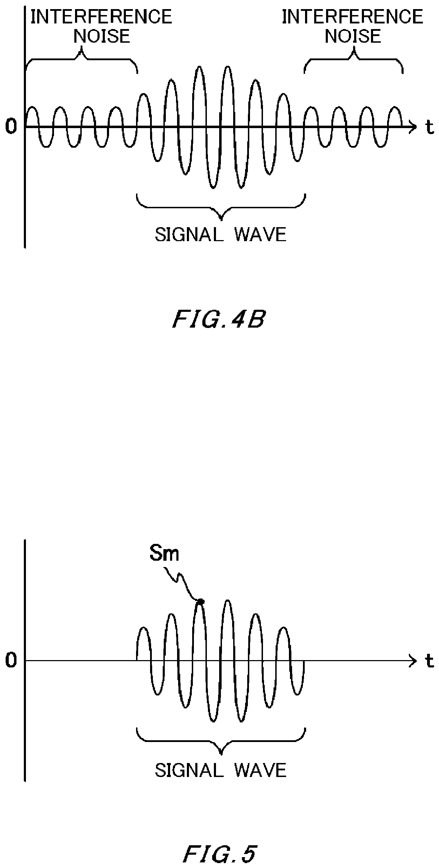

By repeating, for example, at an interval of 1 to 5 milliseconds, the above-described two operations, that is, the switching between the switches 13 and 14 by the switching signal generated by the timing generating section 17 and the driving of the transmission section 15 and the reception section 16 by the drive signal generated by the timing generating section 17, the measurement unit 10 repeatedly propagates the ultrasonic wave in the medium 98 inside the pipe 99 from the sensor 11 in the forward direction and receives the ultrasonic wave by the sensor 12, and also propagates the ultrasonic wave in the medium 98 inside the pipe 99 from the sensor 12 in the backward direction and receives the ultrasonic wave by the sensor 11. Here, one example of a waveform of the ultrasonic wave received by the reception section 16, that is, the reception signal, is shown in Fig. 4A and Fig. 4B.

The waveform of Fig. 4A is the waveform of a received normal reception signal with respect to the ultrasonic wave of the waveform of Fig. 3. The reception signal has two components. One of the two components is the signal wave which is propagated in the medium 98 inside the pipe 99 from the sensor 11(12) and is received by the sensor 12(11). The signal wave vibrates in the same cycle as that of the ultrasonic wave generated by the transmission section 15, and the amplitude of the envelope of the vibration is also increased or decreased in a longer cycle due to the scattering and the like at the pipe wall within the pipe 99. The other of the two components is the interference noise which is transmitted from the sensor 11(12) to the pipe 99 and is received by the sensor 12 (11). The interference noise vibrates in a cycle equal to that of the ultrasonic wave generated by the transmission section 15. The envelope of the vibration has an amplitude sufficiently small with respect to the signal wave and is approximately constant over time. In the reception signal, since these two components are superimposed on each other, the interference noise appears around a time t, and the signal wave appears dominantly in the middle of the time t.

The waveform of Fig. 4B is a waveform of a received abnormal reception signal with respect to the waveform of the ultrasonic wave of Fig. 3. The reception signal has two components, that is, the signal wave and the interference noise, similar to the normal reception signal of Fig. 4A. Here, in a case of the signal wave, the ultrasonic wave output by the sensor 11 (12) to the inside of the pipe 99 is scattered due to the foreign substance contained in the medium 98 and the amplitude is significantly attenuated. On the other hand, in a case of the interference noise, since the interference noise is derived from the ultrasonic wave transmitted to the pipe 99, the interference noise is received with the amplitude which is hardly attenuated. Accordingly, in the reception signal, the amplitude of the signal wave for the interference noise is small, that is, the S/N ratio is low.

The reception signal received by the reception section 16 is sequentially transmitted to the calculating section 20 and stored in the memory 22 along with the signal number via the AD converter 21. In the present embodiment, it is supposed that the reception signal (referred to as the forward signal) derived from the ultrasonic wave which is propagated in the medium 98 inside of the pipe 99 from the sensor 11 in the forward direction and is received by the sensor 12, and the reception signal (referred to as the backward signal) derived from the ultrasonic wave which is propagated in the medium 98 inside the pipe 99 from the sensor 12 in the backward direction and is received by the sensor 11 are respectively assigned with the signal numbers in a reception order and be stored in the memory 22.

In a Step S2, by the difference calculating section 23a of the calculating section 20, a difference in the waveforms of a plurality of reception signals stored in the memory 22 is calculated to generate a difference signal. As one example of the waveform of the difference signal, a difference signal obtained by a difference between the reception signal of the waveform of Fig. 4A and the reception signal of the waveform of Fig. 4B is shown in Fig. 5. The difference signal includes two components included in the reception signal, that is, the signal wave and the interference noise, and since the signal waves in two reception signals have different amplitudes of the envelope of the vibration from each other, the signal wave having the envelope with the finite amplitude also appears in the difference signal. On the other hand, since the interference noises in two reception signals have approximately the same amplitudes of the envelope of the vibration, the interference noises are offset by the difference of the two reception signals and hardly appear in the difference signal. Accordingly, the difference signal becomes to the one corresponding to the amplitude difference of the signal wave component only in the waveform of the two reception signals, and may be set as the target signal component for identifying the reception timing of the ultrasonic wave.

The difference calculating section 23a calculates the difference in the waveforms of each of two or more sets of two reception signals of the plurality of reception signals for each of the forward signal and the backward signal, and generates the difference signal. For example, the difference calculating section 23a calculates the difference in the waveforms of each of two reception signals having signal numbers, one of the signal numbers just before the other of the signal numbers, that is, the difference in the waveforms between the i-th reception signal and the i+1th reception signal (where i = 1 ∼ total number of the forward signal or the backward signal -1), and generates the difference signal. Otherwise, the difference calculating section 23a calculates the difference in the waveforms of each of two reception signals having signal numbers which are before and after N which is a number of two or more, that is, the difference in the waveforms between the i-th reception signal and the i+Nth reception signal (i = 1 ∼ total number of the forward signal or the backward signal -N), and generates the difference signal. Accordingly,, in order to secure a time lag between the first measurement wave and the second measurement wave, an effect of easily extracting the difference between the first measurement wave and the second measurement wave is obtained. If the flow velocity of the medium 98 is slow, since the fluctuation of the amplitude of the signal waves in the continuous reception signals is smooth, the value of N may be set to be large, and if the flow velocity of the medium is fast, since the fluctuation of the amplitude of the signal waves in the continuous reception signals is rapid, the value of N may be set to be small.

In a Step S3, the polarity of the target signal component included in the difference signal generated by the difference calculating section 23 is determined by the polarity determining section 23b. As one example, the polarity determining section 23b determines that the polarity of the target signal component is positive (negative) if a value of a point (a point Sm in Fig. 5) at which an absolute value of the difference signal becomes maximum is positive (negative).

In a Step S4, the difference signal generated by the difference calculating section 23 a is added for each of the forward signal and the backward signal by the adding section 23c. Here, the adding section 23c adds the difference signal based on the determination result of the polarity determined by the polarity determining section 23b, that is, if the polarity is positive, the adding section 23c adds the difference signal without any inversion (that is, by + one time), and if the polarity is negative, the adding section 23c inverts the difference signal (that is, by - one time) and adds the inverted difference signal. Accordingly, the addition may be performed for each of the plurality of difference signals by unifying the polarity which may be variable depending on the sizes of the amplitudes of two reception signals. A white noise included in the added difference signal is removed by an averaging effect.

In a Step S5, the measurement mode of the identifying section 23d is selected by the mode selecting section 23e. The mode selecting section 23e determines whether or not the amplitude of the added difference signal or the individual difference signal is equal to or more than a predetermined reference value, and if the amplitude is equal to or more than the reference value, the mode selecting section 23e selects the first measurement mode and moves on to a Step S6, and if the amplitude is less than the reference value, the mode selecting section 23e selects the second measurement mode and moves on to a Step S7.

Note that in the Step S5, the mode selecting section 23e may select the measurement mode of the identifying section 23d by using the added reception signal or the individual reception signal.

In the Step S6, the reception timing of each of the forward signal and the backward signal is identified by the identifying section 23d based on the target signal component included in the difference signal added by the adding section 23c. For example, the identifying section 23d identifies the reception timing according to the timing at which the amplitude of the target signal component exceeds the predetermined threshold. After the identification, the measurement apparatus 100 advances the process to a Step S9.

In the Step S7, the reception signal stored in the memory 22 is added by the adding section 23c for each of the forward signal and the backward signal. Here, the adding section 23c adds the reception signal without operating the polarity. The white noise included in the added reception signal is removed by the averaging effect.

In a Step S8, the reception timing of each of the forward signal and the backward signal is identified by the identifying section 23d based on the reception signal added by the adding section 23c. For example, the identifying section 23d identifies the reception timing according to the timing at which the amplitude of the reception signal exceeds the predetermined threshold. After the identification, the measurement apparatus 100 advances the process to the Step S9.

In the Step S9, the flow velocity of the medium 98 is calculated by the flow velocity calculating section 23f based on the identified reception timing of each of the forward signal and the backward signal. The flow velocity calculating section 23f calculates a difference (represented as ΔT) of the reception timing of each of the forward signal and the backward signal, and, for example, uses the difference ΔT of the reception timing and a separation distance between the sensors 11 and 12 related to the flow direction of the medium 98 to calculate the flow velocity V.

Note that the flow velocity calculating section 23f may multiply the calculated flow velocity by the cross-sectional area of the pipe 99 to calculate the flow rate of the medium 98.

The measurement apparatus 100 of the present embodiment includes a measurement unit 10 to propagate an ultrasonic wave in the medium 98 flowing inside the pipe 99 by using the sensors 11 and 12 which are provided in the pipe 99 and to receive the ultrasonic wave, a difference calculating section 23 a to calculate a difference signal obtained by taking a difference of waveforms between reception signals of at least two received ultrasonic waves, and an identifying section 23d to identify a reception timing of transmission of an ultrasonic wave based on a target signal component included in the difference signal. The interference noise is offset by the difference of waveforms between two reception signals, and only the target signal component corresponding to the amplitude difference of the component of the signal wave only becomes to be included in the difference signal. Accordingly, based on the target signal component included in the difference signal, the reception timing of transmission of the ultrasonic wave can be identified precisely.

Note that in the measurement apparatus 100 of the present embodiment, the ultrasonic wave is used as the measurement wave to be propagated in the medium; however, the measurement wave is not limited to the ultrasonic wave. Any measurement wave which can be propagated in the medium 98 flowing inside the pipe 99 from the outside of the pipe 99, for example, a sound wave, maybe used. In this case, if the interference noise derived from the measurement wave transmitted to the pipe is steadily superimposed on the signal component derived from the measurement wave propagated in the medium, the reception timing can be identified based on the signal component only by eliminating the interference noise from the reception signal.

Also, the measurement apparatus 100 of the present embodiment is set to be an apparatus to use the trigger method, that is, the measurement apparatus 100 measures a propagation time period when an ultrasonic wave is propagated in a medium in a flow direction and a propagation time period when the ultrasonic wave is propagated in an opposite direction to the flow direction to obtain a flow velocity from a difference between results of these measurements; however, the measurement apparatus 100 is not limited to the above and may be set as an apparatus to measure the propagation time period of the ultrasonic wave in the medium and identify the medium based on the measurement result or an apparatus to measure a propagation distance arose from a level and the like of the medium.

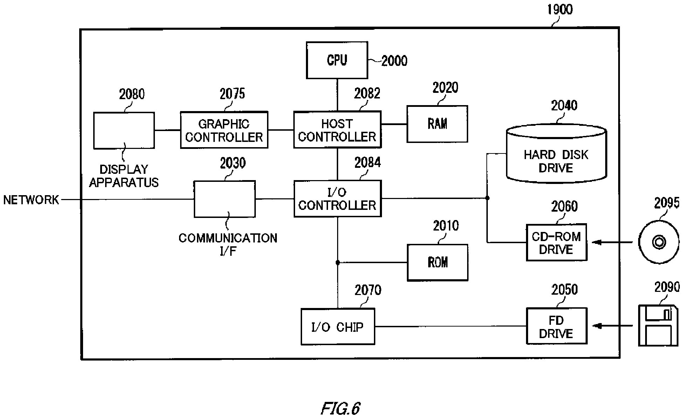

Fig. 6 shows one example of a hardware configuration of a computer 1900 according to the present embodiment. The computer 1900 according to the present embodiment includes a CPU peripheral section having a CPU 2000, a RAM 2020, a graphic controller 2075 and a display apparatus 2080 which are interconnected via a host controller 2082, an input/output section having a communication interface 2030, a hard disk drive 2040, and a CD-ROM drive 2060 which are connected to the host controller 2082 via an input/output controller 2084; and a legacy input/output section having a ROM 2010, a flexible disk drive 2050, and an input/output chip 2070 which are connected to the input/output controller 2084.

The host controller 2082 connects the RAM 2020 to the CPU 2000 accessing to the RAM 2020 at a high transfer rate and the graphic controller 2075. The CPU 2000 operates based on a program stored in the ROM 2010 and the RAM 2020 to perform controlling on each section. The graphic controller 2075 acquires image data generated on a frame buffer provided within the RAM 2020 by the CPU 2000 and the like, and displays the image data on the display apparatus 2080. Instead of this, the graphic controller 2075 may include the frame buffer therein, which stores the image data generated by the CPU 2000 and the like.

The input/output controller 2084 connects the host controller 2082 to the communication interface 2030 which is a relatively-high-speed input/output apparatus, the hard disk drive 2040, and the CD-ROM drive 2060. The communication interface 2030 communicates with other apparatuses via a network. The hard disk drive 2040 stores a program and data used by the CPU 2000 which is within the computer 1900. The CD-ROM drive 2060 reads a program or data from the CD-ROM 2095 and provides the read program or data to the hard disk drive 2040 via the RAM 2020.

Also, the input/output controller 2084 is connected to the ROM 2010, the flexible disk drive 2050, and a relatively-low-speed input/output apparatus of the input/output chip 2070. The ROM 2010 stores a boot program executed when the computer 1900 runs and/or a program and the like depending on a hardware of the computer 1900. The flexible disk drive 2050 reads a program or data from the flexible disk 2090, and provides the read a program or data to the hard disk drive 2040 via the RAM 2020. The input/output chip 2070 connects the flexible disk drive 2050 to the input/output controller 2084, and also connects various input/output apparatuses to the input/output controller 2084 via, for example, a parallel port, a serial port, a keyboard port, a mouse port, and the like.

The program provided to the hard disk drive 2040 via the RAM 2020 is stored in a recording media, such as the flexible disk 2090, the CD-ROM 2095, an IC card, or the like, and is provided by a user. The program is read out from the recording media, installed in the hard disk drive 2040 within the computer 1900 via the RAM 2020, and executed on the CPU 2000.

The program installed in the computer 1900 and causing the computer 1900 to serve as the measurement apparatus 100 includes a difference calculating program, a polarity determining program, an adding program, an identifying program, a mode selecting module, and a flow velocity calculating program. These programs or modules work on the CPU 2000 and the like to cause the computer 1900 to serve respectively as the difference calculating section 23a, the polarity determining section 23b, the adding section 23c, the identifying section 23d, the mode selecting section 23e, and the flow velocity calculating section 23f.

By reading therein information processing described in these programs, the computer 1900 serves as the difference calculating section 23a, the polarity determining section 23b, the adding section 23c, the identifying section 23d, the mode selecting section 23e, and the flow velocity calculating section 23f which are specific means realized by cooperation among software and various hardware resources described above. Then, according to these specific means, the specific measurement apparatus 100 corresponding to a purpose of usage is constructed by achieving operations or processing on information corresponding to a purpose of usage of the computer 1900 in the present embodiment.

As one example, when a communication between the computer 1900 and an external apparatus and the like is to be performed, the CPU 2000 executes a communication program loaded on the RAM 2020 and instructs the communication interface 2030 to perform the communication processing based on the processing contents described in the communication program. The communication interface 2030 is controlled by the CPU 2000, reads out transmission data stored in a transmission buffer region and the like provided on a storage apparatus such as the RAM 2020, the hard disk drive 2040, the flexible disk 2090, the CD-ROM 2095, or the like, and transmits the transmission data to the network, or writes the reception data received from the network into the reception buffer region and the like provided on the storage apparatus. In this way, the communication interface 2030 may transfer the transmission/reception data between the storage apparatuses by a DMA (direct memory access) method, or, instead of this, the CPU 2000 may transfer the transmission/reception data by reading out data from a storage apparatus or the communication interface 2030, which is a transfer source, and writing the data into the communication interface 2030 or the storage apparatus, which is a transfer destination.

Also, the CPU 2000 reads all or necessary parts from among files, database, or the like stored in external storage apparatuses such as the hard disk drive 2040, the CD-ROM drive 2060 (the CD-ROM 2095), the flexible disk drive 2050 (flexible disk 2090), and the like into the RAM 2020 by the DMA transfer and the like, and performs various processing on the data which is on the RAM 2020. Then, the CPU 2000 writes back the data on which the processing has be done to the external storage apparatuses by the DMA transfer and the like. In such a processing, since the RAM 2020 may be regarded as temporarily holding the contents of the external storage apparatuses, the RAM 2020, the external storage apparatuses, and the like in the present embodiment are collectively called a memory, a storage section, a storage apparatus, or the like. Various information, such as various programs, data, tables, databases and the like in the present embodiment, are stored on such a storage apparatus and become the target of the information processing. Note that the CPU 2000 may hold a part of the RAM 2020 in a cache memory, and may also perform writing on the cache memory. Because in such an embodiment also, the cache memory plays a role of a part of the functions of the RAM 2020, the cache memory is also regarded as being included in the RAM 2020, a memory and/or a storage apparatus in the present embodiment, unless otherwise they are distinguished from each other.

Also, the CPU 2000 performs, on data read out from the RAM 2020, various processing including various operations, information processing, conditional judgments, information searches/replacements or the like described in the present embodiment that are specified according to an instruction sequence of a program, and writes the data back into the RAM 2020. For example, in a case where the conditional judgment is to be performed, the CPU 2000 compares various variables shown in the present embodiment with other variables or constants to determine whether or not a condition, such as "larger", "smaller", "equal to or more than", "equal to or less than", "equal to", and the like, is satisfied, and if the condition is satisfied (or not satisfied), branches to a different instruction sequence or calls up a subroutine.

Also, the CPU 2000 may search information stored in the files, database, or the like within the storage apparatus. For example, in a case where a plurality of entries in which attribute values of second attributes are respectively associated with attribute values of first attributes are stored in the storage apparatus, the CPU 2000 may search an entry, from among the plurality of entries stored in the storage apparatus, which meets the condition specified by the attribute value of the first attribute, and may obtain the attribute value of the second attribute associated with the first attribute which satisfies the prescribed condition by reading out the attribute value of the second attribute stored in the entry.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

The program or module shown above may be stored in an external recording media. As the recording media, other than the flexible disk 2090 and the CD-ROM 2095, an optical recording media such as DVD or CD, magneto-optical recording media such as MO, a tape media, a semiconductor memory such as an IC card, and the like may be used. Also, a storage apparatus such as a hard disk, a RAM, or the like provided to a server system connected to a dedicated communication network or the Internet may be used as the recording media, and a program may be provided to the computer 1900 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10 ... measurement unit, 11 ... sensor, 12 ... sensor, 13 ... switch, ... 14 ... switch, 15 ... transmission section, 16 ... reception section, 17 ... timing generating section, 20 ... calculating section, 21 ... AD converter, 22 ... memory, 23 ... calculating section, 23a ... difference calculating section, 23b ... polarity determining section, 23c ... adding section, 23d ... identifying section, 23e ... mode selecting section, 23f ... flow velocity calculating section, 98 ... medium, 99 ... pipe, 100 ... measurement apparatus, 1900 ... computer, 2000 ... CPU, 2010 ... ROM, 2020 ... RAM, 2030 ... communication interface, 2040 ... hard disk drive, 2050 ... flexible disk drive, 2060 ... CD-ROM drive, 2070 ... input/output chip, 2075 ... graphic controller, 2080 ... display apparatus, 2082 ... host controller, 2084 ... input/output controller, 2090 ... flexible disk, 2095 ... CD-ROM

## Claims

1. A measurement apparatus, comprising:
a measurement unit to propagate a first measurement wave and a second measurement wave in a medium and to receive the first measurement wave and the second measurement wave;
a difference calculating section to calculate a difference signal obtained by taking a difference between the received first measurement wave and the received second measurement wave; and
an identifying section to identify a reception timing of transmission of a measurement wave based on a target signal component included in the difference signal.

2. The measurement apparatus according to Claim 1, wherein
the difference calculating section takes the difference between the received first measurement wave and the received second measurement wave, and calculates the difference signal corresponding to an amplitude difference in target signal components between the first measurement wave and the second measurement wave.

3. The measurement apparatus according to Claim 1 or 2, wherein
the measurement unit propagates a plurality of measurement waves in the medium and receives the plurality of measurement waves,
the difference calculating section calculates the difference signal for each of two or more sets of the first measurement wave and the second measurement wave among the plurality of measurement waves, and
the identifying section identifies the reception timing of transmission of the measurement wave based on a target signal component included in each of two or more of the difference signals calculated by the difference calculating section.

4. The measurement apparatus according to Claim 3, wherein
the identifying section identifies an average reception timing of transmission of the measurement wave based on the target signal component included in each of the two or more of the difference signals calculated by the difference calculating section.

5. The measurement apparatus according to Claim 3 or 4, wherein
the measurement unit sequentially propagates the plurality of measurement waves in the medium, and
the difference calculating section calculates the difference signal by taking a difference between the first measurement wave and the second measurement wave, which is after two or more of the first measurement waves, among the plurality of measurement waves.

6. The measurement apparatus according to any one of Claims 1 to 5, further comprising:
a polarity determining section to determine a polarity of a target signal component included in the difference signal in accordance with a polarity of a point at which an absolute value of the difference signal becomes maximum, wherein
the identifying section identifies the reception timing of transmission of the measurement wave based on the target component included in the difference signal and the polarity determined by the polarity determining section.

7. The measurement apparatus according to any one of Claims 1 to 6, wherein
the identifying section identifies a reception timing of transmission of the measurement wave in based on the target signal component included in the difference signal in a first measurement mode, and
the identifying section identifies the reception timing of transmission of the measurement wave based on the target signal component included in at least one measurement wave of the first measurement wave and the second measurement wave in a second measurement mode.

8. The measurement apparatus according to Claim 7, further comprising:
a mode selecting section to select the first measurement mode if an amplitude of the difference signal is equal to or more than a reference value, and to select the second measurement mode if the amplitude of the difference signal is less than the reference value.

9. The measurement apparatus according to Claim 7, selecting either the first measurement mode or the second measurement mode in accordance with whether or not an amplitude of a predetermined number or proportion or more of the difference signals of a plurality of the difference signals corresponding to a plurality of sets of the first measurement wave and the second measurement wave are equal to or more than a reference value.

10. The measurement apparatus according to any one of Claims 1 to 9, wherein
the measurement unit propagates in the medium a first set of measurement waves including the first measurement wave and the second measurement wave, propagates a second set of measurement waves including the first measurement wave and the second measurement wave in an opposite direction to a direction of the first set of measurement waves, and receives the first set and the second set of measurement waves,
the difference calculating section calculates a first difference signal with respect to the first measurement wave and the second measurement wave included in the first set, and a second difference signal with respect to the first measurement wave and the second measurement wave included in the second set,
the identifying section identifies a first reception timing of the first set of measurement waves based on a target signal component included in the first difference signal, and identifies a second reception timing of the second set of measurement waves based on a target signal component included in the second difference signal, and
the measurement apparatus further comprises a flow velocity calculating section to calculate a flow velocity of the medium based on the first reception timing and the second reception timing.

11. The measurement apparatus according to any one of Claims 1 to 10, wherein
the measurement unit propagates in the medium, which is a fluid, the first measurement wave and the second measurement wave, which are ultrasonic waves, and receives the first measurement wave and the second measurement wave.

12. A measurement method, comprising:
propagating in a medium a first measurement wave and a second measurement wave, and receiving the first measurement wave and the second measurement wave;
calculating a difference signal obtained by taking a difference between the received first measurement wave and the received second measurement wave; and
identifying a reception timing of transmission of a measurement wave based on a target signal component included in the difference signal.

13. A program causing a computer to execute procedures of:
propagating in a medium a first measurement wave and a second measurement wave, and receiving the first measurement wave and the second measurement wave;
calculating a difference signal obtained by taking a difference between the received first measurement wave and the received second measurement wave; and
identifying a reception timing of transmission of a measurement wave based on a target signal component included in the difference signal.
